# FASCICULE DE BREVET EUROPEEN

(11) **EP 0 573 314 B1**
(45) Date de publication et mention de la délivrance du brevet: **04.06.1997**
(21) Numéro de dépôt: 93400539.8
(22) Date de dépôt: 02.03.1993
(51) Int. Cl.: G05B 19/05

(54) **Unité d'automate ou d'automatisme programmable**
Steuereinheit oder Programmierbare Steuerung
Control unit or programmable control

(30) Priorité: 23.03.1992 FR 9203447
(43) Date de publication de la demande: 08.12.1993
(73) Titulaire: AEG SCHNEIDER AUTOMATION, 75016 Paris (FR)
(72) Inventeur: Doucet, René, F-38660 Lumbin (FR); Chapier, René, F-06600 Antibes (FR); Michel, Thierry, F-38100 Grenoble (FR)
(74) Mandataire: Carias, Alain

(56) Documents cités:
- EP-A- 0 174 231
- DE-A- 3 813 980
- US-A- 4 498 172
- US-A- 4 597 080
- IEEE TRANSACTIONS ON CIRCUITS AND SYSTEMS FOR VIDEO TECHNOLOGY no. 2, Juin 1991, NEW YORK US pages 230 - 236 , XP214525 STERLING R. WHITAKER ET AL. 'Reed Solomon VLSI Codec for advanced television'

## Description

La présente invention concerne une unité d'automate ou d'automatisme programmable, comprenant un microprocesseur numérique et un processeur spécifique par exemple booléen recevant via un bus un code d'application spécifique correspondant à un programme d'application ainsi qu'une mémoire.

Il est connu d'utiliser dans les automates programmables tels que celui décrit dans le brevet DE 3 813 980 des systèmes comprenant deux processeurs éxecutant chacun des tâches spécialisées. Le brevet EP-0 174 231 décrit d'une part un microprocesseur numérique rapide gérant les tâches système et exécutant des instructions sur mots et sur blocs fonctions, d'autre part un processeur booléen exécutant, entre autres, les opérations sur bits et ayant en charge le code application, (c'est à dire celui de l'application d'automatisme) et un processeur d'entrées-sorties. Les différents processeurs travaillent avec des mémoires: mémoire contenant le code système, mémoire RAM interne, mémoire amovible sur support (cartouche).

On a vérifié que, dans un contrôle de processus, 95 % des défauts sont dûs au procédé lui-même et que les 5% restants ont pour origine l'automate programmable. Parmi les défauts dûs à l'automate programmable, 90% sont relatifs aux dispositifs d'entrée-sortie et 10% sont dûs à l'unité centrale. Il existe un grand nombre de défauts possibles et ces défauts peuvent se combiner.

Les défauts dans l'unité centraie sont critiques parce que l'unité centrale a en charge de détecter les autres types de défauts.

On utilise différentes techniques de contrôle des défauts qui sont soit des techniques matérielles soit des techniques logicielles.

Certaines méthodes de test ont pour but de vérifier qu'au moment de leur exécution, le système ne présente pas de défauts. Elles effectuent un contrôle permanent, exécuté pendant le fonctionnement normal de l'unité centrale et sont qualifiées de "test en ligne".

Une de ces méthodes consiste à vérifier l'intégrité de la mémoire résidente et de la mémoire amovible sur support par un bit de parité. Cette parité est vérifiée par le processeur booléen en lecture du code application. Les défauts pouvant être détectés par cette méthode sont soit des défauts internes aux mémoires soit des erreurs sur les bus de données. La mémoire image des entrées-sorties dans l'automate est également protégée par un bit de parité interne à cette mémoire.

Une autre méthode de vérification de l'intégrité des mémoires contenant des données est la méthode dite "checksum". Un cheksum est exécuté régulièrement en tâche de fond sur l'ensemble de la mémoire contenant des données figées. Ces checksums sont exécutés par le processeur numérique.

D'autres méthodes de test ont pour but de détecter au plus tôt un erreur déjà révélée et d'éviter une défaillance plus dommageable du système.

La méthode du chien de garde ("Watchdog") consiste à envoyer périodiquement des instructions de réarmement à un dispositif monostable redéclenchable. Le temps compris entre l'exécution de deux ordres consécutifs de réarmement doit être inférieur à la durée générée par le dispositif monostable car sinon il y a activation d'un signal de dépassement. Si l'un des processeurs est dans un état bloquant, le signal de dépassement est alors activé.

Le principal défaut des méthodes de test en ligne évoquées ci-dessus concerne leur latence de détection d'erreurs (c'est à dire le temps s'écoulant entre l'instant où une erreur est apparait et l'instant où cette erreur est détectée). Mis à part la méthode de parité dont la latence de détection est nulle, les autres méthodes ont, en général, une latence de détection supérieure au cycle de mise à jour des sorties. En conséquence, une erreur, même si elle est détectable par ces méthodes, pourra entraîner des erreurs en sortie, avant que le défaut ne soit signalé.

La présente invention a pour but de fournir une unité d'automate ou d'automatisme programmable disposant d'un test en ligne par analyse de signature sur le programme d'application. Cette unité centrale présente un niveau de sécurité amélioré, en particulier grâce à l'augmentation du taux d'erreurs détectées (particulièrement en ce qui concerne les erreurs transitoires), à la réduction de la latence de détection des erreurs, à la réduction des conséquences potentiellement dangereuses de certaines défaillances détectables. Les moyens de test incorporés à l'unité objet de l'invention apportent un très large taux de couverture des défauts pour lesquels les effets néfastes sur l'application sont inhibés. L'invention permet d'augmenter la sécurité d'applications existantes sans que des modifications importantes soient à apporter, en dehors du remplacement de l'unité. Il n'est pas nécessaire de modifier la structure du programme ni le jeu d'instructions du processeur mais il faut stocker des informations relatives à la structure du programme en plus des valeurs de test et d'ajustements. Ces informations doivent être exploitées par les moyens réalisant la génération de signature.

L'unité conforme à l'invention est caractérisée par le fait que le processeur spécifique comporte des moyens de génération et d'analyse de signature aptes à générer une signature sur le code d'application spécifique et à comparer les valeurs de signature ainsi générées et des valeurs de signature stockées en mémoire ainsi que des moyens d'ajustement permettant de réaliser l'invariance de la signature en une position de programme qu'elle que soit la séquence normale d'exécution ayant permis d'y accéder.

Selon une autre caractéristique, les moyens pour calculer la signature comprennent un registre de signature et une logique associée qui permet de calculer une nouvelle signature en fonction de la signature précédente, de l'instruction courante et d'une fonction de codage prédéfinie.

Selon une autre caractéristique, la fonction de codage est constituée par un polynôme.

Selon une caractéristique, l'unité comporte, dans une zone mémoire différente de la zone mémoire contenant le code application à vérifier, une table de valeurs précalculées de référence permettant de vérifier la signature courante.

Selon une autre caractéristique, les moyens d'ajustement comportent une table de valeurs précalculées d'ajustement, dans une zone mémoire différente de la zone mémoire contenant le code application à vérifier.

Selon une autre caractéristique, les moyens réalisant l'ajustement de signature tiennent à jour un pointeur sur la table d'ajustement, cohérente avec le pointeur d'instruction du code d'application et ajustent la signature courante à chaque saut de séquence du programme d'application, ceci en utilisant la valeur d'ajustement référencée par le pointeur sur la table d'ajustement et de référence.

Selon une autre caractéristique, le processeur spécifique comprend des moyens pour vérifier la signature mémorisée dans le registre de signature avec des valeurs précalculées de référence stockées dans une table de zone mémoire.

L'invention va maintenant être décrite avec plus de détail en se référant à un mode de réalisation donné à titre d'exemple et représenté par les dessins annexés sur lesquels:
- La figure 1 représente l'architecture générale d'une unité centrale selon l'invention;

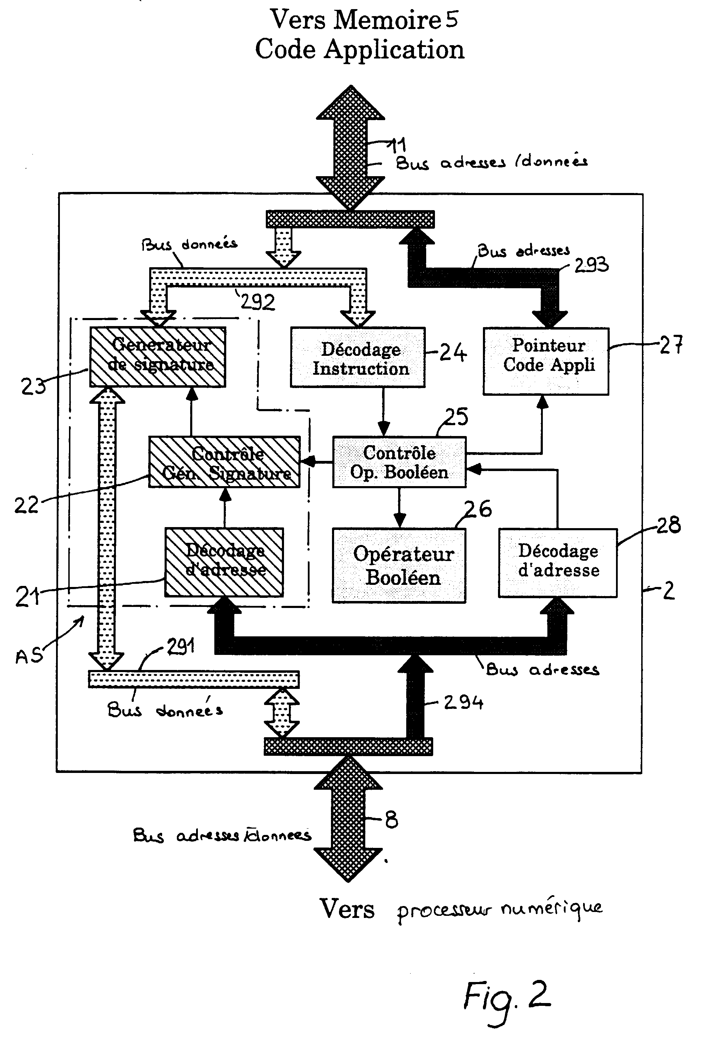

- La figure 2 est un diagramme fonctionnel du processeur spécifique faisant partie de l'unité centrale de la figure 1;
- La figure 3 montre un diagramme du dispositif de génération de signature implémenté dans le processeur spécifique.

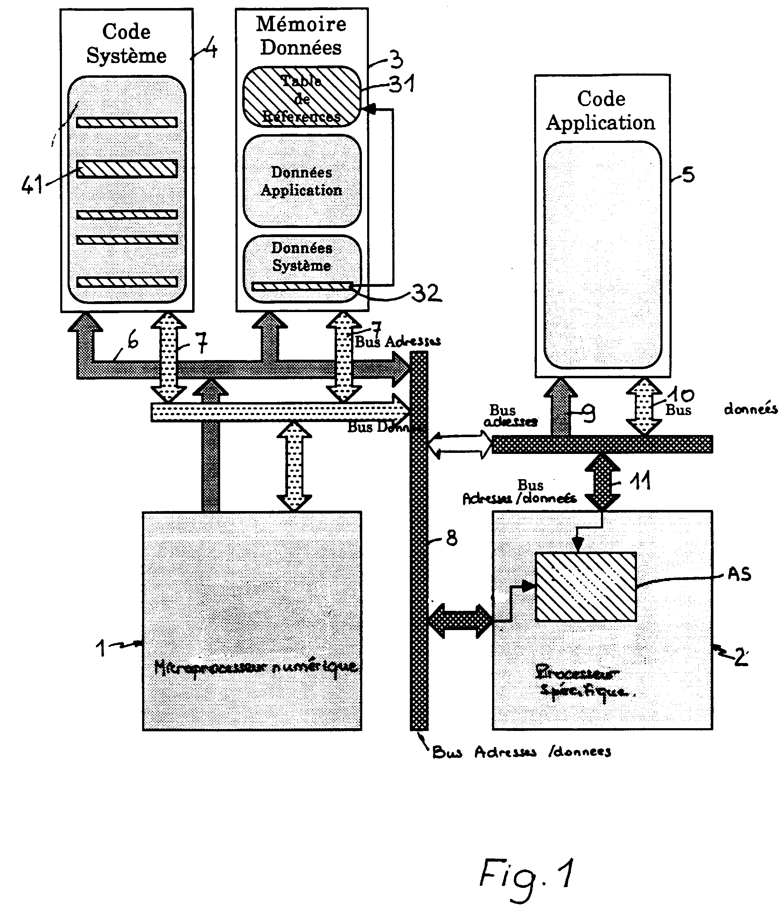

En se référant à la figure 1, l'unité centrale comporte un microprocesseur numérique standard 1 et un processeur spécifique 2 exécutant des instructions booléennes. A titre indicatif, le processeur numérique est un processeur connu sous la dénomination INTEL™, type 80386 et le processeur spécifique 2 est un processeur booléen.

Le microprocesseur numérique 1 travaille avec une mémoire 3, par exemple de type RAM, permettant le stockage temporaire des données application, des données système, de la table de références 31 dont la fonction sera expliquée ultérieurement et avec une mémoire 4, par exemple de type ROM, contenant le code système. Le processeur spécifique 2 travaille avec une mémoire 5 par exemple de type RAM ou EPROM contenant le code application c'est à dire le code d'une application particulière d'automatisme.

Un bus d'adresses 6 sert à transporter les adresses générées par le microprocesseur 1 vers les mémoires 3 et 4. Les échanges d'adresses entre les mémoires 3 et 4 et le processeur spécifique 2 s'effectuent par le bus d'adresses 6 et un bus bidirectionnel d'adresses et de données 8.

Un bus bidirectionnel de données 7 transmet les données entre les mémoires 3 et 4 et le microprocesseur numérique 1. Les échanges de données entre ces mémoires 3 et 4 et le processeur spécifique 2 s'effectuent par le bus bidirectionnel de données 7 et le bus bidirectionnel d'adresses et de données 8.

Un bus d'adresses et de données 11 et un bus associé d'adresses 9 transportent les adresses générées par le processeur spécifique 2 vers la mémoire 5 du code application.

Les échanges de données entre la mémoire 5 et le processeur spécifique 2 s'effectuent par un bus bidirectionnel de données 10 et le bus bidirectionnel d'adresses et de données 11.

Le processeur spécifique 2 comporte un bloc de décodage d'adresses 28 relié au bus bidirectionnel d'adresses et de données 8 via un bus d'adresses 294, un bloc opérateur spécifique 26 et un bloc de contrôle 25 du bloc opérateur spécifique 26. Un bloc pointeur 27 du code application est relié au bus d'adresses et de données 11 via un bus interne d'adresses 293. Un bloc de décodage instruction 24 est relié au bus d'adresses et de données 11 via un bus interne de données 292.

A chaque instruction du programme correspond une valeur de signature intermédiaire qui est le résultat de la compaction des codes des instructions précédemment exécutées. Cette signature intermédiaire n'est pas testée à chaque instruction, mais en certains endroits du programme. Ces points de tests sont choisis en fonction de la latence de détection désirée. Une erreur mémoire dans le programme exécuté ainsi qu'une erreur de cheminement du processeur dans le programme pourront ainsi être détectées car la signature résultant de la séquence d'instructions erronée sera différente de la signature normalement attendue.

Pour faciliter le stockage des valeurs de références pour le test, la signature est rendue invariante en tout point du programme. C'est-à-dire que la signature intermédiaire théorique pour une instruction donnée est unique et ne dépend que de la structure du programme. Cette propriété sur la signature doit être forcée à l'aide d'une opération spéciale appelée "ajustement de signature". Cette opération doit avoir lieu avant chaque point de jonction du programme. Un point de jonction est une instruction où plusieurs branches du programme se rejoignent. La signature générée par chaque branche est normalement différente et pour avoir une signature unique au point de jonction il est nécessaire de modifier les signatures de tous les chemins (sauf un) arrivant au point de jonction de telle sorte que tous les chemins génèrent la même signature.

Le processeur spécifique 2, comporte un dispositif de génération et d'analyse de signature portant la référence AS qui génère ou calcule une signature représentative des instructions exécutées par le processeur spécifique 2 et qui vérifie la signature ainsi calculée avec des valeurs précalculées de référence.

Le dispositif de génération et d'analyse de signature AS, implémenté dans le processeur spécifique 2, réalise le calcul de signature en continu des instructions (code application) stockées dans la mémoire 5 et exécutées par le processeur spécifique 2. Ce dispositif AS comporte un bloc de décodage d'adresses 21 qui décode 4 adresses et qui est relié au bus d'adresses et de données 8 via le bus d'adresses 294 et fournit des signaux de commande RD_SIGN, WR_SIGN, WR_AJS, WR_TEST, WR_CPCT sur les entrées d'un bloc de contrôle 22 du générateur de signature 23. Les sorties Selb, Adjust, Shift, Valid, Outr de ce bloc de contrôle 22 délivrent des signaux de commande à un bloc de génération de signature 23 qui est relié par ailleurs au bus d'adresses et de données 8 via un bus de données interne 291 et au bus 11 via un bus de données interne 292.

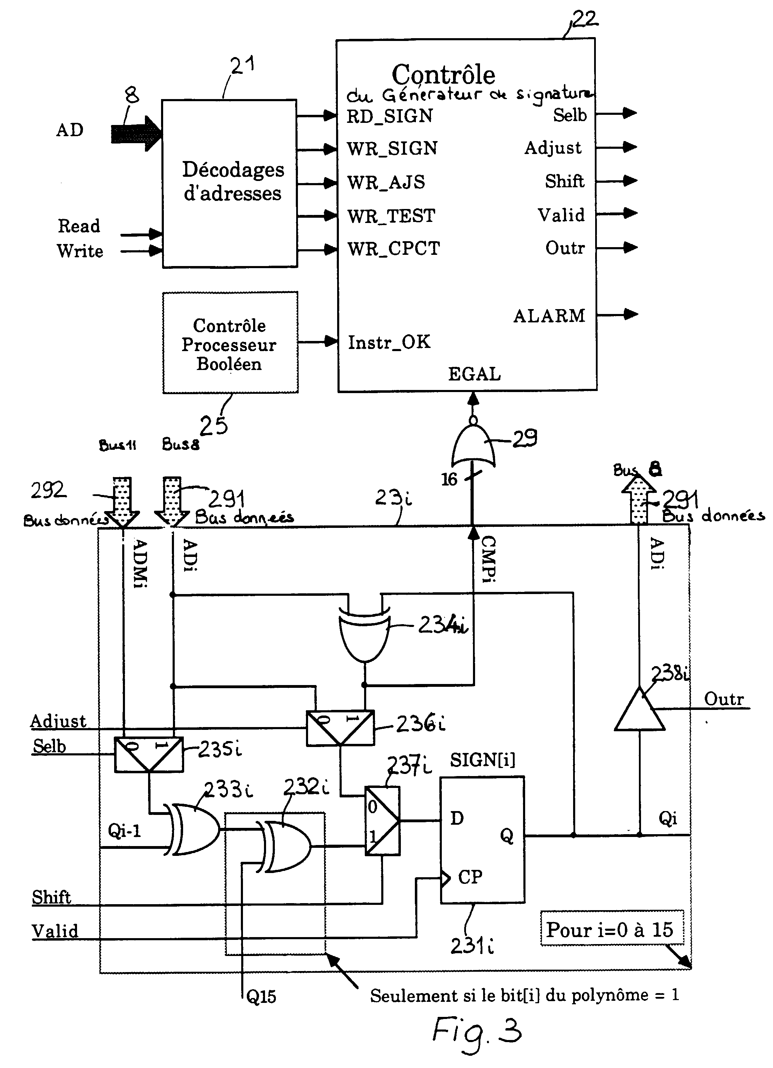

Ce bloc de génération de signature 23 se compose de sous-ensembles 23i(figure 3), le nombre de ces sous-ensembles étant égal au nombre de bits dans les bus de données. La génération de signature est effectuée par ce bloc 23 au moment où le processeur 2 lit la mémoire 5 contenant le code application.

Pour la génération de signature, on utilise une fonction mathématique de codage prédéfinie qui, dans le mode de réalisation décrit ici, est constituée par un polynôme désigné P. A titre indicatif, on peut utiliser, par exemple, un polynôme de la forme X¹⁵+X¹¹+X⁴+X⁰.

Ce bloc de génération de signature 23 comporte un registre de signature 231 du type à décalage 231 qui est composé de bascules 231i et stocke la valeur de la signature correspondant à l'instruction qui vient d'être exécutée. Lorsqu'une instruction vient d'être lue et qu'elle va être exécutée (signal Instr_OK activé, envoyé au bloc de contrôle de signature 22), le bloc 23 génère, grâce à une logique associée au registre de signature 231, une nouvelle signature à partir de la signature courante, de l'instruction qui vient d'être lue et est disponible sur le bus de données 11 et 292 (Selb=0,Shift=1,Valid=1) et de la fonction de codage .

En mode génération ou calcul de signature, le signal de sortie Qᵢ₋₁ d'une bascule 231i-1 est envoyé via un OU exclusif 233i et un OU exclusif 232i, si la condition de rebouclage décrite ci-dessous est vraie, sur l'entrée D de la bascule 231i suivante. Chaque OU exclusif 233i reçoit, sur une entrée, le bit i de l'instruction présente sur le bus 11 via le multiplexeur 235i et, sur l'autre entrée, la sortie Q-1 de la bascule 231i-1 de poids inférieur.

La condition de rebouclage permettant de générer la signature est vraie, si et seulement si, le bit [i] du polynôme P est égal à 1.

Le OU exclusif 232i reçoit, sur une entrée, le bit de poids fort de la signature intermédiaire et sur , l'autre entrée, la sortie du OU exclusif 233i recevant le signal de sortie d'une bascule 231i-1 de poids inférieur du registre de signature.

En plus de la génération de signature sur des instructions exécutées par le processeur spécifique 2, le dispositif AS permet de générer une signature sur des valeurs fournies par le microprocesseur numérique 1. Ceci permet de contrôler le séquencement de fonctions traitées par le microprocesseur numérique 1. Dans ce mode de génération de signature, la donnée à compacter provient du bus 8 et 291 (repéré aussi ADi sur la figure 3), via le multiplexeur 235i.

En mode d'analyse de signature, chaque sortie Q d'une bascule 231i du registre de signature 231 et le bit de même niveau du code présent sur le bus d'adresses et de données 8 sont envoyés sur les entrées d'un OU exclusif (XOR) 234i. Les sorties des OU exclusifs 234i sont reliées à un NOR 29 à plusieurs entrées (autant que le nombre de bits du bus données) de manière à détecter une différence entre la valeur de signature contenue dans le registre à décalage 231 et la valeur de référence de signature qui est présente sur le bus 8 et est stockée dans la table 31.

En mode ajustement, chaque bascule 231i reçoit, en entrée, le OU exclusif de Qi et de ADi venant du bus (8 et 291), via les multiplexeurs 236i et 237i.

Le dispositif permet également une lecture et une écriture du microprocesseur numérique 1. En écriture, chaque bascule 231i du registre de signature reçoit le contenu ADi venant du bus 8, 291, via les multiplexeurs 236i et 237i. En lecture, chaque sortie Qi d'une bascule 231i du registre de signature est envoyée sur le bus de données 8, via un buffer 3 états 238i.

Les valeurs de référence de test et d'ajustement de la signature sont précalculées à partir de la structure du programme (après la compilation).

Les valeurs de référence de test de signature sont stockées dans une zone de la mémoire 3 qui est séparée de la zone mémoire 5 contenant le code application. Les mémoires sont ou non physiquement différentes selon la conception adoptée. La mémoire données 3 contient d'une part une zone contenant la table 31 des valeurs d'ajustement de test pour la signature et des informations sur la structure du programme vérifié et d'autre part le pointeur 32 sur cette table de références 31.

Les références sont lues par le dispositif d'analyse de signature AS grâce à un pointeur 32 dont l'évolution est similaire au pointeur d'instructions 27 du processeur spécifique 2.

A chaque instruction modifiant ce pointeur d'instruction (instructions de séquencement: branchements, sauts, départs et retours en sous-programmes), on associe d'une part une valeur d'ajustement de signature et d'autre part une valeur pour le pointeur de référence.

La valeur d'ajustement a pour effet de forcer la signature à la valeur de signature intermédiaire du point de jonction (instruction destination de l'instruction de séquencement).

Le test de la signature est associé à certaines instructions du programme (fin de code, entrées/sorties). Dans ce cas, une valeur de référence est stockée dans la table de références 31, à la position qui correspond à l'instruction associée au test.

En cas de détection d'une différence entre la valeur de la signature stockée dans le registre de signature 231 et la valeur de référence stockée dans la table 31 de la mémoire données 3, le bloc de contrôle 22 déclenche une alarme ( sortie ALARM).

Le microprocesseur numérique 1 peut envoyer 5 signaux de commande au bloc de contrôle 22 du générateur de signature de manière à agir sur le registre de signature 231 et à réaliser les opérations définies ci-après.

Le signal RD_SIGN permet de lire, pour une sauvegarde, le contenu du registre de signature 231 dont le contenu est envoyé sur le bus de données 291 et sur le bus d'adresses et de données 8. La sortie Outr du bloc de contrôle 22 est alors activée et le signal correspondant est reçu par le registre trois états 238 qui valide l'envoi du contenu du registre 231 sur le bus 8.

Le signal WR_SIGN permet de charger le contenu du bus 8 et du bus associé 291 dans le registre de signature 231 pour l'initialisation ou une restitution (Adjust=0,Shift=0,Valid=1).

Le signal WR_AJS permet de réaliser un ajustement sur la signature: le registre de signature 231 est chargé, via le OU exclusif 233i, de la valeur présente sur le bus 8 ou la bus associé 291(Adjust=1,Shift=0,Valid=1).

Le signal WR_TEST permet de réaliser un test de comparaison entre la signature stockée dans le registre de signature 231 et la signature présente sur le bus 8(Adjust=1,Shift=1,Valid=0).

Le signal WR-CPCT permet de compacter une valeur présente sur le bus de données 8, 291 dans le registre de signature. Cette valeur est compactée de la même manière qu'une instruction booléenne (Shift=1,Selb=1,Valid=1).

Le code du microprocesseur numérique 1 stocké dans la mémoire 4 contient des instructions 41 destinées à prendre en charge les ajustements et les tests de la signature ainsi que la gestion du pointeur de référence lors de l'exécution des instructions correspondantes dans le programme d'application. Il contient d'autre part des instructions pour assurer la cohérence de la signature et du pointeur 32 de référence lors de la commutation et de l'activation de tâches.

Selon une variante, l'accès à la table 31 peut être fait directement par le processeur spécifique 2, celui-ci devant inclure le pointeur 32 et les mécanismes de gestion correspondants. Cette variante supprime les instructions 41.

Selon une autre variante, les valeurs de référence de test de signature peuvent être stockées dans le code application stocké dans la mémoire 5, sous forme de paramètres d'instructions spéciales placées aux endroits adéquats du programme d'application. Dans ce cas, il est nécessaire de modifier la structure du programme pour ajouter les instructions spécifiques à l'analyse de la signature. Il faut également disposer de codes opératoires dans le jeu d'instructions du processeur spécifique 2. Cette variante fait disparaître la table 31 et le pointeur 32.

Il est bien entendu que l'on peut, sans sortir du cadre de l'invention, imaginer des variantes et des perfectionnements de détail et de même envisager l'emploi de moyens équivalents.

Ainsi, pour caractériser la fonction de compaction, on peut utiliser d'autres polynômes que le polynôme défini ci-dessus ou d'autres fonctions que des polynômes.

En variante, la topologie des mémoires et des bus pourraient être différentes.

## Revendications

1. Unité d'automate ou d'automatisme programmable, comprenant un microprocesseur numérique (1) et un processeur spécifique (2) par exemple booléen recevant via un bus un code d'application spécifique correspondant à un programme d'application ainsi qu'une mémoire (3), caractérisée par le fait que le processeur spécifique (2) comporte des moyens de génération et d'analyse de signature (AS) aptes à générer une signature sur le code d'application spécifique et à comparer les valeurs de signature ainsi générées et des valeurs de signature stockées en mémoire (3) ainsi que des moyens d'ajustement (22) permettant de réaliser l'invariance de la signature en une position de programme qu'elle que soit la séquence normale d'exécution ayant permis d'y accéder.

2. Unité selon la revendication précédente, caractérisée par le fait que les moyens de génération de signature (AS) comprennent un registre de signature (231) et une logique associée (232i, 233i, 237i, 239), qui permet de calculer une nouvelle signature en fonction de la signature précédente, de l'instruction courante et d'une fonction de codage prédéfinie.

3. Unité selon la revendication 2, caractérisée par le fait que la fonction de codage est constituée par un polynôme.

4. Unité selon l'une quelconque des revendications précédentes, caractérisée par le fait qu'elle comporte, dans une zone mémoire (3) différente de la zone mémoire (5) contenant le code application à vérifier, une table (31) de valeurs précalculées de référence permettant de vérifier la signature courante.

5. Unité selon l'une quelconque des revendications précédentes, caractérisée par le fait que les moyens d'ajustement comportent une table (31) de valeurs précalculées d'ajustement, dans une zone mémoire (3) différente de la zone mémoire (5) contenant le code application à vérifier.

6. Unité selon l'une quelconque des revendications précédentes, caractérisée par le fait que les moyens réalisant l'ajustement de sighature tiennent à jour un pointeur sur la table d'ajustement (31), cohérente avec le pointeur d'instruction (27) du code d'application et ajustent la signature courante à chaque saut de séquence du programme d'application, ceci en utilisant la valeur d'ajustement référencée par le pointeur (32) sur la table d'ajustement et de référence.

7. Unité selon l'une quelconque des revendications précédentes, caractérisée par le fait que le processeur spécifique (2) comprend des moyens (234,29) pour vérifier la signature mémorisée dans le registre de signature (231) avec des valeurs précalculées de référence stockées dans une table (31) de zone mémoire (3).

8. Unité selon l'une quelconque des revendications précédentes, caractérisé par le fait que les moyens de génération et d'analyse de signature (AS) comprennent un générateur de signature constitué d'un registre à décalage

9. Unité selon l'une quelconque des revendications précédentes, caractérisé par le fait que les moyens de génération et d'analyse de signature (AS) comportent des moyens pour générer une signature sur les valeurs fournies par le processeur numérique (1).

## Patentansprüche

1. Automateneinheit oder programmierbare Automatikeinheit, die mit einem numerischen Mikroprozessor (1) und einem spezifischen Prozessor (2), wie beispielsweise ein logischer Prozessor, ausgestattet ist, der über einen Bus einen spezifischen Anwendungscode erhält, der einem Anwendungsprogramm und einem Speicher (3) entspricht, gekennzeichnet dadurch, daß der spezifische Prozessor (2) Instrumente zur Kennzeichnungsgenerierung und -analyse (AS) beinhaltet, die in der Lage sind, eine Kennzeichnung auf den spezifischen Anwendungscode zu generieren und die auf diese Weise generierten Kennzeichnungswerte und im Speicher (3) abgelegte Kennzeichnungswerte zu vergleichen, ebenso wie Anpassungsinstrumente (22) zur Herstellung der Unveränderlichkeit der Kennzeichnung an einer Programmstelle, dies unabhängig von der normalen Ablaufsequenz, die den Zugang hierzu ermöglicht hat.

2. Einheit nach dem vorherigen Anspruch, gekennzeichnet dadurch, daß die Instrumente zur Kennzeichnungsgenerierung (AS) ein Kennzeichnungsverzeichnis (231) und eine zugehörige Logik (232i, 233i, 237i, 239) für die Berechnung einer neuen Kennzeichnung entsprechend der vorhergehenden Kennzeichnung, dem laufenden Befehl und einer vorgegebenen Codierungsfunktion enthalten.

3. Einheit nach Anspruch 2, gekennzeichnet dadurch, daß die Codierungsfunktion aus einem Polynom besteht.

4. Einheit nach einem der vorherigen Ansprüche, gekennzeichnet dadurch, daß sie in einer anderen Speicherzone (3) als die der Speicherzone (5), in welcher der zu überprüfende Anwendungscode enthalten ist, eine Tabelle (31) mit vorberechneten Referenzwerten beinhaltet, anhand der die laufende Kennzeichnung geprüft werden kann.

5. Einheit nach einem der vorherigen Ansprüche, gekennzeichnet dadurch, daß die Anpassungsinstrumente in einer anderen Speicherzone (3) als die der Speicherzone (5), in welcher der zu überprüfende Anwendungscode enthalten ist, eine Tabelle (31) mit vorberechneten Anpassungswerten beinhalten.

6. Einheit nach einem der vorherigen Ansprüche, gekennzeichnet dadurch, daß die Instrumente, welche die Kennzeichnungsanpassung ausführen, einen Zeiger auf der Anpassungstabelle (31) aktualisieren, die mit dem Befehlszeiger (27) des Anwendungscodes übereinstimmt, und die bei jedem Sequenzsprung des Anwendungsprogramms laufende Kennzeichnung anpassen. Dies erfolgt unter Verwendung des vom Zeiger (32) auf der Anpassungs- und Referenzwerttabelle etikettierten Anpassungswerts.

7. Einheit nach einem der vorherigen Ansprüche, gekennzeichnet dadurch, daß der spezifische Prozessor (2) mit Instrumenten (234, 29) zum Vergleich der im Kennzeichnungsverzeichnis (231) abgelegten Kennzeichnung mit vorberechneten und in einer Tabelle (31) der Speicherzone (3) gespeicherten Referenzwerten ausgestattet ist.

8. Einheit nach einem der vorherigen Ansprüche, gekennzeichnet dadurch, daß die Instrumente zur Kennzeichnungsgenerierung und -analyse (AS) einen Kennzeichnungsgenerator enthalten, der aus einem Shift-Verzeichnis besteht.

9. Einheit nach einem der vorherigen Ansprüche, gekennzeichnet dadurch, daß die Instrumente zur Kennzeichnungsgenerierung und -analyse (AS) Instrumente zur Kennzeichnungsgenerierung auf Werte, die vom numerischen Prozessor (1) ausgegeben werden, enthalten.

## Claims

1. Programmable logic controller or automatic control unit comprising a digital microprocessor (1) and a specific processor (2), for example a Boolean processor receiving a specific application code corresponding to an application program through a bus, and a memory (3) characterized in that the specific processor (2) comprises signature generation and analysis means (AS) capable of generating a signature on the specific application code and comparing the signature values thus generated and signature values stored in memory (3), and adjustment means (22) used to make the signature invariable at a program position regardless of the normal execution sequence by which this point was accessed.

2. Unit according to the preceding claim, characterized in that signature generation means (AS) comprise a signature register (231) and an associated logic (232i, 233i, 237i, 239) used to calculate a new signature as a function of the previous signature, the current instruction and a predefined coding function.

3. Unit according to claim 2, characterized in that the coding function is composed of a polynomial.

4. Unit according to any one of the preceding claims, characterized in that it includes a table (31) of precalculated reference values used to verify the current signature, in a memory area (3) other than the memory area (5) containing the application code to be verified.

5. Unit according to any one of the preceding claims, characterized in that the adjustment means comprise a table (31) of precalculated adjustment values, in a memory area (3) different from the memory area (5) containing the application code to be verified.

6. Unit according to any one of the preceding claims, characterized in that the means adjusting the signature update a pointer to the adjustment table (31) consistent with the application code instruction pointer (27), and adjust the current signature following each GOTO in the application program sequence, using the adjustment value referenced by pointer (32) to the adjustment and reference table.

7. Unit according to any one of the preceding claims, characterized in that the specific processor (2) comprises means (234, 29) to verify the signature stored in the signature register (231) with precalculated reference values stored in table (31) in the memory area (3).

8. Unit according to any one of the preceding claims, characterized in that the signature generation and analysis means (AS) comprise a signature generator composed of an offset register.

9. Unit according to any one of the preceding claims, characterized in that the signature generation and analysis means (AS) comprise means of generating a signature on values supplied by the digital processor (1).
